# NEUE EUROPÄISCHE PATENTSCHRIFT

(11) **EP 2 964 481 B2**
(45) Veröffentlichungstag und Bekanntmachung des Hinweises auf die Entscheidung über den Einspruch: **16.11.2022**
(45) Hinweis auf die Patenterteilung: 27.06.2018
(21) Anmeldenummer: 15712858.8
(22) Anmeldetag: 23.03.2015
(51) Int. Cl.: B60L 5/40, B60M 1/34, H01B 5/08, H01P 3/12

(54) **SCHLEIFLEITUNG, STROMABNEHMER UND SCHLEIFLEITUNGSSYSTEM**
CONDUCTOR LINE, CURRENT COLLECTOR, AND CONDUCTOR LINE SYSTEM
LIGNE À FROTTEMENT, COLLECTEUR DE COURANT ET SYSTÈME À LIGNE À FROTTEMENT

(30) Priorität: 27.05.2014 DE 102014107466
(43) Veröffentlichungstag der Anmeldung: 13.01.2016
(73) Patentinhaber: Conductix-Wampfler GmbH, 79576 Weil am Rhein (DE)
(72) Erfinder: ECKLE, Michael, 79379 Müllheim (DE); MAIER, Bernd, 79418 Schlingen (DE)
(74) Vertreter: Charrier Rapp & Liebau
(86) Internationale Anmeldenummer: PCT/EP2015/056104
(87) Internationale Veröffentlichungsnummer: WO 2015/180855

(56) Entgegenhaltungen:
- DE-A1-102009 024 518
- DE-A1-102011 002 239
- JP-A- S6 230 429

## Beschreibung

Die Erfindung betrifft eine Schleifleitung nach dem Oberbegriff des Anspruchs 1, einen Stromabnehmer nach dem Oberbegriff des Anspruchs 6 und ein Schleifleitungssystem nach dem Oberbegriff des Anspruchs 12.

Bei bekannten Schleifleitungssystemen fährt ein verfahrbarer elektrischer Verbraucher, entlang einer Schleifleitung. Zur Versorgung des Verbrauchers mit elektrischer Energie ist dieser mit einem Stromabnehmer ausgestattet, dessen Schleifkontakte in längs der Schleifleitung geführte Leiterstränge eingreifen. Der Verbraucher kann z.B. ein Transportgehänge einer Schienenhängebahn, ein auf Schienen verfahrbarer Leitungswagen oder auch sog. E-RTG-Containerkräne sein, welche mit einem elektrischen Fahrantrieb ausgerüstet sind, der von der Schleifleitung mit elektrischer Energie versorgt wird.

Um auf den Verbraucher Daten übertragen zu können, z. B. Steuerdaten, werden bei bekannten Schleifleitungssystemen sogenannte Schlitzhohlleiter bzw. Leckwellenleiter parallel zu den Leitersträngen der Schleifleitung geführt, in die am Verbraucher angeordnete Antennen eingreifen.

So offenbart die DE 10 2004 008 571 B4 ein Tragschienenprofil einer als Doppel-T-Träger ausgebildeten Tragschiene mit integriertem Schlitzhohlleiter zur Datenübertragung bei einer Schleifschienenanordnung. Der Schlitzhohlleiter ist dort im unteren Fußteil der Tragschiene mit nach unten weisendem Längsschlitz vorgesehen, in den eine Antenne des längs der Tragschiene verfahrbaren Fahrzeugs reicht. Seitlich, also um 90° gegenüber dem Längsschlitz verdreht sind an der Tragschiene Stromschienenhalter und mit darin gehaltenen Stromschienen angeordnet.

Die DE 10 2011 119 351 A1 offenbart ein Transportsystem mit einem schienengeführten Fahrzeug und Schienenprofilteile einer Schienenanlage, wobei an einem Schienenprofilteil ein Schlitzhohlleiter und am Fahrzeug zwei Antennen angeordnet sind, welche in Schienenrichtung voneinander beabstandet sind und in den Schlitzhohlleiter hineinragen, wobei das Schienenprofilteil gerade ausgeführt ist. Auch dort ist der Schlitzhohlleiter an einem Doppel-T-Träger im Abstand zu den stromführenden Leitersträngen angeordnet

Die DE 10 2011 108 584 B1 offenbart eine Datenübertragungsanordnung mit einem Schlitzhohlleiterprofil, welches ortsfest an einem stationären Anlagenteil in Längsrichtung angebracht ist. In den Längsschlitz des Schlitzhohlleiterprofils reicht eine Antenne eines verfahrbaren Mobilteils, das mit diesem längs in dem Schlitzhohlleiterprofil verfahrbar ist.

Die DE 10 2012 002 085 A1 offenbart einen Schlitzhohlleiter für ein längs einer Schiene verfahrbares Schienenfahrzeug mit einem seitlich verlaufenden Längsschlitz. Um das Eindringen von Staub und Wasser in den Längsschlitz des Schlitzhohlleiters zu vermeiden, ist dort ein abgewickeltes Umlenkteil an dem sonst 90° gekippten T-förmigen Hohlraum angeordnet, so dass der Längsschlitz nach dem Umlenkteil senkrecht nach unten gerichtet ist. Die Antenne des Schienenfahrzeugs greift dabei senkrecht von unten in den Längsschlitz ein. Somit werden die elektromagnetischen Wellen durch das Umlenkteil aus dem T-förmigen Hohlraumprofil nach unten zum Längsschlitz abgelenkt.

Die Technik der Schlitzhohlleiter für die Datenübertragung auf spurgebundene Fahrzeuge ist seit langem bekannt und geht beispielsweise aus der DE 25 55 909 C3, DE 29 18 178 A1, DE 33 23 984 A1, DE 30 12 790 C1 oder auch DE 35 05 469 C2 der Firma Messerschmitt-Bölkow-Blohm GmbH hervor und braucht deshalb nicht im Einzelnen erläutert zu werden.

Ein Problem bei parallel zu stromübertragenden Schleifleitungen geführten Schlitzhohlleitern ist die Störung der Datenübertragung im Schlitzhohlleiter durch die Energieübertragung an den stromführenden Schleifleitungskontakten. Da die Schleifleitungskontakte nicht immer exakt in den stromführenden Leitersträngen geführt werden können, treten hier zum Teil kurze Kontaktverluste zwischen Schleifleitungskontakten und Leitersträngen auf, so dass der elektrische Stromfluss aufgrund der kleinen Abstände zwischen den Schleifleitungskontakten und den Leitersträngen nicht abbricht, sondern über die Luft fortgesetzt wird. Dies kann zu Störungen in der Datenübertragung führen. Die Schlitzhohlleiter sind deshalb in der Regel im Abstand zu den strom- und spannungsführenden Leitersträngen und Schleifkontakten geführt.

Dies erfordert jedoch mehr Platz für die Anbringung des Schlitzhohlleiters, wie u.a. aus der DE 10 2004 008 571 B4 und der DE 10 2011 119 351 A1 hervorgeht.

Weiter besteht der Nachteil, dass insbesondere bei Schleifleitungen mit senkrecht nach unten gerichteten Leitersträngen und somit senkrecht von unten nach oben einzuführenden Schleifleitungskontakten auch die verfahrbare Antenne des Schlitzhohlleiters von unten in den üblicherweise nach unten geöffneten T-förmigen Schlitzhohlleiter eingreift. Um eine gute Datenübertragung zu erhalten, soll dabei die schlitzförmige Öffnung des Schlitzhohlleiters möglichst schmal sein. Dies führt jedoch dazu, dass in seitlicher Richtung quer zur Verfahrrichtung nur relativ geringe Abweichung der Antenne von dem gewünschten Mittelweg erlaubt sind, da sonst die Antenne den Schlitzhohlleiter berührt, was auf jeden Fall vermieden werden muss. Um dies zu vermeiden, wird bei manchen Anwendungen der T-förmige Schlitzhohlleiters um 90° gekippt und somit mit waagrechtem Öffhungsschlitz angeordnet, wie in der DE 10 2004 008 571 B4 und der DE 10 2011 119 351 A1 gezeigt. Dies bringt jedoch mit sich, dass Feuchtigkeit und Schmutz sich leichter an dem unteren Öffnungsschlitz des Schlitzhohlleiters sammeln. Zudem ist es bei manchen Anordnungen aus baulichen Gründen nicht möglich, den Schlitzhohlleiter von der Seite zugänglich auszuführen.

Die DE 10 2009 024 518 A1 und DE 10 2011 002 239 A1 offenbaren eine Automatisierungseinheit in fördertechnischen Anlagen mit Mitteln zur Energie- und Datenübertragung zwischen bzw. von einer stationären Leistungsschiene und einer bzw. auf eine mobile Transporteinheit sowie Mittel zur Erfassung und Bestimmung der Position der mobilen Transporteinheit bezogen auf die zurückgelegte Wegstrecke. Die Automatisierungseinheit soll neben einer größeren Betriebs- und Funktionssicherheit insbesondere den Investitions- und Montageaufwand verringern. Hierzu ist die Leistungsschiene mit den Mitteln zur Datenübertragung und Positionsbestimmung integriert, denen an der mobilen Transporteinheit Gegenstücke zur Energieabnahme, Signal-/Datenübertragung und Wegerfassung zugeordnet sind.
Die DE 10 2010 048 586 A1 offenbart eine Anlage mit schienengeführtem Fahrzeug, wobei am Schienenteil zumindest ein Hohlleiterbereich zur Datenübertragung mittels Anregung mindestens einer Mode des Hohlleiterbereichs einstückig ausgebildet ist.
Aufgabe der Erfindung ist es deshalb, eine Schleifleitung, einen Stromabnehmer sowie ein Schleifleitungssystem bereitzustellen, welche die oben genannten Nachteile überwinden und eine kompakte und materialsparende Bauweise sowie eine gute, fehlertolerante Übertragung ermöglichen.

Die Erfindung löst die Aufgabe durch eine Schleifleitung mit den Merkmalen des Anspruchs 1, einen Stromabnehmer mit den Merkmalen des Anspruchs 6 sowie ein Schleifleitungssystem mit den Merkmalen des Anspruchs 12. Vorteilhafte Weiterbildungen und Ausgestaltungen der Erfindung sind in den Unteransprüchen angegeben.

Die eingangs genannte Schleifleitung ist erfindungsgemäß dadurch gekennzeichnet, dass die Signalübertragungsvorrichtung und das Leiterprofil als Baueinheit ausgebildet sind, wobei die Signalübertragungsvorrichtung aus einem elektrisch leitenden Material ausgebildet ist, wobei die Signalübertragungsvorrichtung einen in Längsrichtung verlaufenden länglichen Schlitzhohlleiter mit einem Längsschlitz zur Datenübertragung zu und von dem Verbraucher umfasst, wobei das Leiterprofil als Erdungsleiterprofil ausgebildet ist, und wobei der Schlitzhohlleiter in das Erdungsleiterprofil integriert ist. Hierdurch kann die Schleifleitung kompakter gebaut werden, so dass die Fertigung und der Einbau vereinfacht und Material gespart werden können. Entsprechendes gilt für den eingangs genannten Stromabnehmer, der erfindungsgemäß dadurch gekennzeichnet ist, dass der Schleifkontakt und die Antenne aus einem elektrisch leitenden Material und als Baueinheit ausgebildet sind, wobei die Signalübertragungsvorrichtung einen länglichen Schlitzhohlleiter mit einem Längsschlitz zur Datenübertragung zu und von dem Verbraucher umfasst, wobei das Leiterprofil als Erdungsleiterprofil ausgebildet ist, wobei der Schlitzhohlleiter in das Erdungsleiterprofil integriert ist, und wobei der Schleifkontakt als Erdungsschleifkontakt ausgebildet ist. Durch eine mit einer solchen Schleifleitung und einem solchen Stromabnehmer ausgerüsteten Schleifleitungssystem können diese Vorteile gut ausgenutzt werden.

Bevorzugt können dabei der Längsschlitz und eine Kontaktöffnung des Leiterstrangs zur Aufnahme des Schleifkontakts in die gleiche Richtung weisen bzw. der Schleifkontakt und die Antenne senkrecht zur Längsrichtung in die gleiche Richtung weisen. Dabei können Schleifkontakt und Antenne vorteilhaft zum gemeinsamen Bewegen von und zu dem Leiterprofil bzw. einem Längsschlitz des Schlitzhohlleiters an einem gemeinsamen Zustellmechanismus angeordnet sein.

Vorteilhaft kann das Leiterprofil quer zur Längsrichtung neben dem Längsschlitz mindestens eine Schleiffläche für eine entsprechend geformte und ausgerichtete Schleifkontaktfläche des Schleifkontakts aufweisen, welcher quer zu Längsrichtung neben der Antenne und elektrisch von dieser isoliert angeordnet sein kann. Weiter kann in einer vorteilhaften Weiterbildung das Leiterprofil quer zur Längsrichtung beidseits des Längsschlitzes Schleifflächen für entsprechend geformte und ausgerichtete Schleifkontaktflächen zweier beidseits der Antenne angeordneter und elektrisch von dieser isolierter Schleifkontakte aufweisen.

Durch geeignete Ausbildung der Schleifflächen und der entsprechenden Schleifkontaktfläche kann ein selbstzentrierender Effekt erreicht werden, so dass Fahrtabweichungen quer zur Längsrichtung reduziert werden können. Bevorzugt kann bei nureinem Schleifkontakt die Schleifkontaktfläche keilförmig bzw. abgerundet und die entsprechende Schleiffläche V-förmig bzw. abgerundet ausgebildet sein. Weiter bevorzugt können bei den beidseits angeordneten Schleifkontakten die Schleifkontaktflächen zueinander gegensinnig abgeschrägt und/oder abgerundet sein, und die Schleifflächen entsprechend gegensinnig abgeschrägt und/oder abgerundet sein. Hierdurch ergibt sich wiederum eine Kombination von V-förmigen bzw. abgerundeten Schleifflächen und keilförmigen bzw. abgerundeten Schleifkontaktflächen oder umgekehrt.

In einer weiteren Ausführung können der Längsschlitz bzw. die Antenne oder ein Teil davon ganz oder teilweise gegenüber einer Verfahrebene, in welcher der Stromabnehmerwagen respektive der Stromabnehmer mit seinen Schleifkontakten in Längsrichtung verfahrbar ist, um einen Winkel α ungleich 90° um die Längsrichtung gekippt sein, wobei der Winkel α größer oder gleich 0°, bevorzugt größer 0°, und kleiner 90° ist. Dabei kann in einer vorteilhaften Fortbildung ein in den Längsschlitz des Schlitzhohlleiters ragendes Ende der Antenne um den Winkel α abgewinkelt sein. Weiter können der Längsschlitz und eine Kontaktöffnung des Leiterstrangs zur Aufnahme des Schleifkontakts um den Winkel α zueinander gekippt sein. Hierdurch kann die Schleifleitung kompakter gebaut werden, und zudem können in einer in Längsrichtung verlaufenden Verfahrebene erfolgende Fahrabweichungen besser ausgeglichen werden.

In einer materialsparenden und fertigungstechnisch günstigen Ausführung können der Schlitzhohlleiter und das Leiterprofil einstückig aus einem elektrisch leitenden Material ausgebildet sein.

Weiter können vorteilhaft der Schleifkontakt und die Antenne zueinander parallel verlaufen, und/oder in Längsrichtung nebeneinander oder hintereinander angeordnet sein. Auch können vorteilhaft in Längsrichtung zwei Antennen hintereinander angeordnet sein.

Bevorzugt kann bei dem erfindungsgemäßen Schleifleitungssystem der verfahrbare elektrische Verbraucher mehrere Schleifkontakte zur Kontaktierung mit entsprechenden Leiterprofilen der Schleifleitung aufweisen, wobei das mindestens eine Leiterprofil einen Erdungsleiter und/oder Schutzleiter bildet.

Die Erfindung wird nachfolgend anhand von detaillierten Ausführungsbeispielen mit Bezug auf die begleitenden Zeichnungen beschrieben. Diese zeigen:
- **Fig. 1**: eine seitliche Draufsicht auf einen Abschnitt eines erfindungsgemäßen Schleifleitungssystems;
- **Fig. 2**: eine stirnseitige, schnittähnliche Draufsicht auf das Schleifleitungssystems aus Fig. 1;
- **Fig. 2a**: eine Detailansicht eines Teils des Schleifleitungssystems aus Fig. 2;
- **Fig. 3**: eine stirnseitige, schnittähnliche Draufsicht auf eine alternative Ausgestaltung des Schleifleitungssystems aus Fig. 1;
- **Fig. 4**: eine stirnseitige, schnittähnliche Draufsicht auf eine weitere alternative Ausgestaltung des Schleifleitungssystems aus Fig. 1;
- **Fig. 5**: eine stirnseitige, schnittähnliche Draufsicht auf eine weitere alternative Ausgestaltung des Schleifleitungssystems aus Fig. 1;

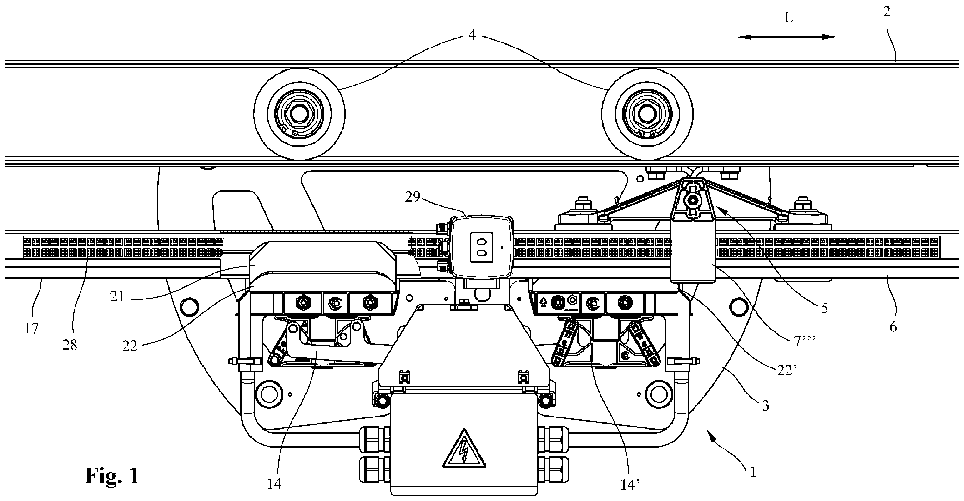

Fig. 1 zeigt eine seitliche Draufsicht auf einen Abschnitt eines erfindungsgemäßen Schleifleitungssystems 1 mit einem im Wesentlichen Doppel-U-förmigen Schienenstrang 2. An dem Schienenstrang 2 ist ein Stromabnehmer 3 eines nicht gezeichneten elektrischen Verbrauchers mit Laufrollen 4 in eine Längsrichtung L verfahrbar. Der Stromabnehmer 3 dient zur Versorgung des längs des Schienenstrangs 2 verfahrbaren elektrischen Verbrauchers, beispielsweise eines Containerkrans.

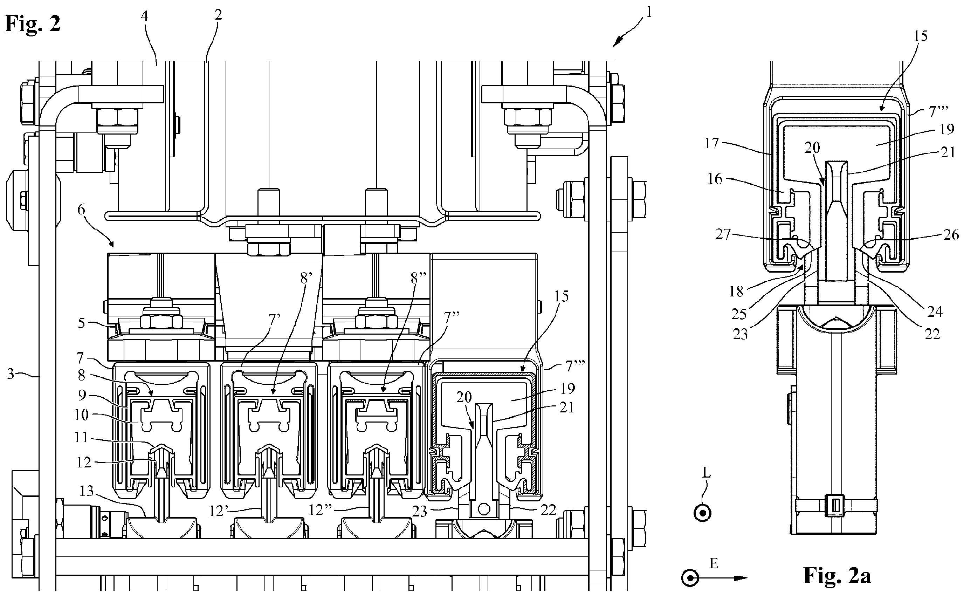

An der unteren Seite des Schienenstrangs 2 ist mittels in Längsrichtung L des Schienenstrangs 2 voneinander beabstandet angebrachten Schleifleitungshalterungen 5 eine erfindungsgemäße Schleifleitung 6 nach unten hängend angebracht. Die Schleifleitung 6 weist dabei in Fig. 2 bis 5 gut erkennbar drei nebeneinander angeordnete Leiterstranghalterungen 7, 7' und 7" zur Halterung von länglichen Phasenleitersträngen 8, 8' und 8" auf. Da die Phasenleiterstränge 8' und 8" identisch zum Phasenleiterstrang 8 ausgebildet sind, gelten die zum Phasenleiterstrang 8 gemachten Ausführungen entsprechend.

Der Phasenleiterstrang 8 weist ein längliches Isolierprofil 9 auf, welches von der Leiterstranghalterung 7 gehalten wird. In das Isolierprofil 9 ist dann wiederum ein längliches, elektrisch leitendes Phasenleiterprofil 10 mit ebenfalls elektrisch leitender länglicher Schleiffläche 11, bevorzugt aus Aluminium oder Stahl, eingesetzt.

An der Schleiffläche 11 schleift ein Schleifkontakt 12, welcher an einem Schleifkontaktträger 13 des Stromabnehmers 3 angeordnet ist. Der Schleifkontaktträger 13 mit Schleifkontakt 12 kann in an sich bekannter Weise über einen in Fig. 1 exemplarisch gezeigten, an sich bekannte Zustellmechanismus 14 an die Schleiffläche 11 heran und von dieser weg bewegt werden. Im Betrieb wird der Schleifkontakt 12 ständig an die Schleiffläche 11 angedrückt, beispielsweise über Federkraft. In Fig. 2 gezeigte weitere Schleifkontakte 12' bzw. 12" mit zugehörigen Schleifkontaktträgern sind weitgehend identisch zum Schleifkontakt 12 und Schleifkontaktträger 13 ausgebildet, so dass die hierzu gemachten Ausführungen entsprechend gelten. Insbesondere weist jeder Schleifkontakt 12, 12' bzw. 12" einen eigenen Zustellmechanismus 14 auf.

Der Phasenleiterstrang 8 dient der Energieversorgung des verfahrbaren Verbrauchers und steht im Normalbetrieb unter Spannung, so dass Strom über die Schleiffläche 11 zu dem Schleifkontakt 12 fließt. Die oben beschriebene Ausbildung ist dem Fachmann grundsätzlich bekannt und Bedarf keiner weiteren Ausführungen.

Zusätzlich ist bei einem solchen Schleifleitungssystem 1 üblicherweise ein Erdungsleiterstrang 15 zur Verbindung des verfahrbaren elektrischen Verbrauchers mit dem Erdpotential des Schleifleitungssystems 1 vorgesehen. Der Erdungsleiterstrang 15 wird nachfolgend vor allem anhand der Detailzeichnung Fig. 2a beschrieben.

Der Erdungsleiterstrang 15 weist hierzu ein elektrisch leitendes Erdungsleiterprofil 16 auf, das von einem im wesentlichen U-förmigen Erdungsisolierprofil 17 mit einer in Fig. 2a nach unten offenen Kontaktöffnung 18 umgeben ist. Der Erdungsleiterstrang 15 ist mit einer Leiterstranghalterung 7"' wie die Phasenleiterstränge 8, 8', 8" an der Schleifleitung 6 befestigt.

Das Erdungsleiterprofil 16 bildet zugleich einen im wesentlichen T-förmigen Schlitzhohlleiter 19 mit nach unten geöffnetem Längsschlitz 20 aus. Dabei weist der Längsschlitz 20 in die gleiche Richtung wie die nach unten offene Kontaktöffnung 18.

Durch den Längsschlitz 20 reicht wiederum eine in Längsrichtung L ausgerichtete Antenne 21, welche in den Hohlraum des Schlitzhohlleiters 19 eingreift. Wie in Fig. 1 bis 2a gut erkennbar, ist die Antenne 21 beidseitig von einem rechten Erdungsschleifkontakt 22 und linken Erdungsschleifkontakt 23 flankiert, wobei die Antenne 21 elektrisch von den Erdungsschleifkontakte 22, 23 isoliert ist. Die Antenne 21 und die Erdungsschleifkontakte 22, 23 können über den Zustellmechanismus 14 angehoben und dadurch in Kontakt mit dem Erdungsleiterprofil 16 gebracht und gehalten werden, wie oben bereits beschrieben.

Die Erdungsschleifkontakte 22, 23 sind symmetrisch ausgebildet und verlaufen parallel zur Antenne 21. An ihren oberen Enden weisen die in Fig. 2 gezeigten Erdungsschleifkontakt 22, 23 schräg nach außen unten abgeschrägte Erdungsschleifkontaktfläche 24, 25 auf, welche mit dem Zustellmechanismus 14 an entsprechend geneigte Schleifflächen 26, 27 des Erdungsleiterprofil 16 angedrückt werden. Hierdurch wird automatisch eine Zentrierung der Antenne 21 in dem Längsschlitz 20 des Schlitzhohlleiters 19 erreicht. Kippt die Antenne 21 beispielsweise etwas um die Längsrichtung L, so verlieren die abgeschrägten Erdungsschleifkontaktflächen 24, 25 den vollflächigen Kontakt zu den Schleifflächen 26, 27. Aufgrund der abgeschrägten Flächen 24 bis 27 und dem Anpressdruck werden die Erdungsschleifkontaktflächen 24, 25 und die Schleifflächen 26, 27 jedoch wieder aufeinander zu bewegt, bis sie wieder vollflächig aneinanderliegen. Bei der in Fig. 2a gezeigten Detailansicht sind die Erdungsschleifkontaktflächen 24, 25 und die Schleifflächen 26, 27 in Fortbildung der in Fig. 1 gezeigten Ausführung nicht nur abgeschrägt, sondern auch leicht abgerundet, um beim Abkippen der Antenne 21 um die Längsrichtung L das Zurückgleiten in die zentrierte Stellung weiter zu erleichtern.

Da im Normalbetrieb über die Erdungsschleifkontakte 22, 23 keine elektrische Leistung übertragen wird, besteht keine Gefahr, dass es zwischen Erdungsleiterprofil 16 und Erdungsschleifkontakten 22, 23 zu Funkenüberschlägen kommt, welche die Datenübertragung mittels des Schlitzhohlleiters 19 und der Antenne 21 nachteilig beeinflussen. Sofern doch größere Ströme fließen, handelt es sich um einen Notfall, bei dem das Schleifleitungssystem 1 schnell stillgesetzt werden soll.

Erdungsleiterprofil 16 und Schlitzhohlleiter 19 sind vorliegend einstückig aus dem gleichen Material gefertigt und bilden somit eine Baueinheit, wodurch die Fertigung und der Einbau vereinfacht werden können. Erdungsleiterprofil 16 und Schlitzhohlleiter 21 können aber auch aus separaten Teilen und/oder unterschiedlichen Materialien gefertigt werden. Auch kann der Schlitzhohlleiter 19 einen anderen geeigneten Querschnitt aufweisen,
Durch die Integration des Schlitzhohlleiters 19 in
das Erdungsleiterprofil 16 kann die Schleifleitung 6 sehr kompakt ausgeführt werden, so dass keine voneinander getrennten, platzraubenden Aufhängungen für einen Erdungsleiterstrang und einen Schlitzhohlleiter vorgesehen werden müssen. Die Schleifleitung 6 kann somit kleiner bauen und es wird weniger Material benötigt, und auch die Montage vereinfacht sich.

Die in Fig. 2 und 2a gezeigte Ausführung der Erfindung ermöglicht nicht nur eine kompakte Bauweise, sondern sorgt auch für einen möglichst gut im Schlitzhohleiter 19 und Längsschlitz 20 geführte Antenne 21 und somit für eine gute und zuverlässige Datenübertragung. Zudem können die Antenne 21 und die Erdungsschleifkontakte 22, 23 einfach in den Längsschlitz 20 und den Schlitzhohlleiter 19 bzw. an das Erdungsleiterprofil 16 ein- und ausgefahren werden.

Um die Zuverlässigkeit des Schleifleitungssystems 1 weitere zu erhöhen, kann wie bei der in Fig. 1 gezeigten Ausführung vorgesehen werden, dass an einem weiteren Zustellmechanismus 14' eine weitere Antenne mit seitlichen Erdungsschleifkontakten 22' anzuordnen. Hierdurch kann eine Unterbrechung, z.B. durch eine thermisch getrennte Verbindungsstelle des nicht aus Endlosmaterial gebildeten Erdungsleiterprofils 16 und Schlitzhohlleiters 19 überbrückt werden, ohne die Datenübertragung zu unterbrechen.

Weiter ist seitlich an dem Erdungsisolierprofil 17 ein in Fig. 1 gezeigtes, an sich bekanntes längliches Codeband 28 angeordnet, welches über eine an dem Stromabnehmer 3 angebrachte an sich bekannte Leseeinheit 29 ausgelesen und somit die Position bestimmt werden kann.

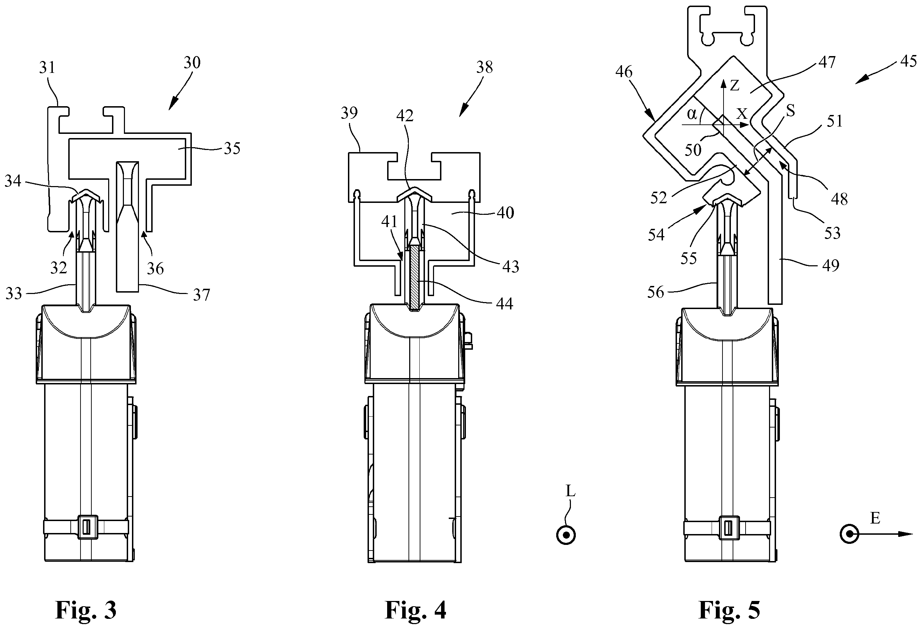

Fig. 3 zeigt eine alternative Ausführung eines Erdungsleiterstrangs 30. Bei gleichen oder sich entsprechenden Teilen werden deshalb die gleichen Bezugzeichen und Bezeichnungen verwendet, die obigen Ausführungen gelten entsprechend. Aus Gründen der Übersichtlichkeit ist ein Erdungsleiterisolierprofil nicht dargestellt
An einem alternativen Erdungsleiterprofil 31 ist eine Kontaktöffnung 32 vorgesehen, durch die ein Erdungsschleifkontakt 33 des Stromabnehmers 3 eingreift. Der Erdungsschleifkontakt 33 schleift an einer Schleiffläche 34 des Erdungsleiterprofils 31 entlang. Der Erdungsleiterstrang 30 und Erdungsschleifkontakt 33 können ausgebildet sein wie die für die Energieübertragung vorgesehenen Phasenleiterstränge 8, 8', 8" und die Schleifkontakte 12.

In dem Erdungsleiterprofil 31 integriert ist ein an sich bekannter, in Längsrichtung L verlaufender länglicher T-förmiger Schlitzhohlleiter 35 mit nach unten weisendem Längsschlitz 36. In den Längsschlitz 36 greift eine am verfahrbaren Verbraucher respektive Stromabnehmer 3 angeordnete Antenne 37, um eine an sich bekannte Datenübertragung zu ermöglichen.

Erdungsleiterprofil 31 und Schlitzhohlleiter 35, die vorliegend einstückig aus dem gleichen Material gefertigt sind, bilden somit wiederum eine Baueinheit, wodurch die Fertigung und der Einbau vereinfacht werden können. Sie können aber wiederum aus separate Teilen und/oder unterschiedlichen Materialien gefertigt werden. Auch kann der Schlitzhohlleiter 35 einen anderen geeigneten Querschnitt aufweisen, wie im Stand der Technik bekannt.

Durch die Integration des Schlitzhohlleiters 35 in das Erdungsleiterprofil 31 kann die Schleifleitung 6 wiederum sehr kompakt ausgeführt werden, so dass keine voneinander getrennten, platzraubenden Aufhängungen vorgesehen werden müssen. Die Schleifleitung 6 kann somit kleiner bauen und es wird weniger Material benötigt. Die in Fig. 4 gezeigte alternative Ausgestaltung unterscheidet sich von der in Fig. 3 gezeigten Ausführung im wesentlichen durch die alternative Ausbildung eines Erdungsleiterstrangs 38. Bei gleichen oder sich entsprechenden Teilen werden deshalb die gleichen Bezugzeichen und Bezeichnungen verwendet, die obigen Ausführungen gelten entsprechend.

Dabei bildet ein Erdungsleiterprofil 39 des Erdungsleiterstrang 38 bereits einen im wesentlichen T-Förmigen Schlitzhohlleiter 39 mit nach unten geöffneten Längsschlitz 41 aus. Am Dach des Hohlraums des Schlitzhohlleiters 40 ist dabei eine Schleiffläche 42 für einen Erdungsschleifkontakt 43 angeordnet. Weiter ist dort eine in Längsrichtung L versetzt zum Erdungsschleifkontakt 43 angeordnete Antenne 44 vorgesehen, welche in Fig. 4 schematisch angedeutet ist. Die Antenne 44 kann wieder wie bei den vorher beschriebenen Ausführungen mit dem Zustellmechanismus 14 gemeinsam mit dem Erdungsschleifkontakt 43 angehoben und abgesenkt werden.

Fig. 5 zeigt eine weitere alternative Ausführung eines Erdungsleiterstrangs 45. Bei gleichen oder sich entsprechenden Teilen werden deshalb die gleichen Bezugzeichen und Bezeichnungen verwendet, die obigen Ausführungen gelten entsprechend.

Bei der in Fig. 5 gezeigten Ausführung kann noch weiter Bauraum gespart und somit kompakter gebaut werden, in dem ein Erdungsleiterprofil 46 einen im wesentlichen T-förmigen Schlitzhohlleiter 47 aufweist, der um einen Winkel α ungleich 90° gegenüber einer Verfahrebene E, in welcher der Stromabnehmer 3 verfährt, um die Längsrichtung L gekippt ist. Insbesondere ist auch ein Längsschlitz 48 des Schlitzhohlleiters 47 um den Winkel α gekippt und ragt somit schräg im Winkel α nach in Fig. 5 rechts unten und außen.

Bevorzugt wird dann eine abgewinkelte Antenne 49 verwendet, deren für die Datenübertragung wichtiges vorderes Antennenende 50 entsprechend dem Kippwinkel α des Schlitzhohlleiters 47 abgewinkelt ist. Hierdurch greift das Antennenende 50 dann in gewünschter Weise durch den gekippten Längsschlitz 48 in den Hohlraum des Schlitzhohlleiters 47 ein, so dass sich keine Nachteile für die Datenübertragung ergeben. Denn durch die abgewinkelte Antenne 49 verläuft das Antennenende 50 wieder in der Symmetrielinie des T-förmigen Schlitzhohleiters 47.

Eine in Fig. 5 obere Schlitzwandung 51 des Längsschlitzes 48 bildet eine Abdeckung für den Längsschlitz 48 und die gegenüberliegende untere kürzere Schlitzwandung 52 gegen Verschmutzung durch Regen, Staub und andere äußere Einflüsse. In einer vorteilhaften, in Fig. 5 dargestellten Ausführung kann die obere Schlitzwandung 51 durch eine nach unten abgewinkelte Wandung 53 nach unten verlängert sein, um zusätzlich Schutz für den Schlitzhohlleiter 47 und die Antenne 49 bereitzustellen. Diese Wandung 53 ist aber nicht unbedingt nötig, um den erfindungsgemäßen Erfolg des gekippten Schlitzhohlleiters 47 zu erzielen. Anstelle der abgewinkelten Wandung 53 kann die obere Schlitzwandung 51 auch gerade verlängert sein, so dass sie über die untere Schlitzwandung 52 hinaussteht. Auch kann die abgewinkelte Schlitzwandung 53 vollständig weggelassen werden, so dass beide Schlitzwandungen 51, 52 gleich lang sind.

An der unteren Schlitzwandung 52 ist ein verbreiterter, etwas gegenüber dem Schlitzhohlleiter 47 leicht federnder Abschnitt 54 des Erdungsisolierprofils 46 vorgesehen. An dem Abschnitt 54 ist wiederum eine Schleiffläche 55 für einen Erdungsschleifkontakt 56 vorgesehen. Der Erdungsschleifkontakt 56 kann wie die Schleifkontakte 12, 12' bzw. 12" über einen eigenen Zustellmechanismus 14 zu und von der Schleiffläche 55 bewegt werden.

Die Ausführung nach Fig. 5 weist den weiteren Vorteil auf, dass die ansonsten kleinen Toleranzen für die Bewegung der Antenne 49 in einer quer zur Längsrichtung L verlaufenden X-Richtung vergrößert werden. Dabei verläuft die X-Richtung auch parallel zu einer Verfahrebene E, in welcher der Stromabnehmer 3 verfahren wird. Üblicherweise erfolgt die Zustellung der Schleifkontakte 12, 12', 12" und des Erdungsschleifkontakts 56 dabei in der senkrecht zur Verfahrebene E stehenden Höhenrichtung Z. Bei den vorliegend gezeigten Ausführungen verläuft die Verfahrebene E in den Zeichnungen horizontal, wird also durch die Längsrichtung L und die X-Richtung aufgespannt. Bei den in der DE 10 2004 008 571 B4 und der DE 10 2011 119 351 A1 gezeigten Schleifleitungen mit zur Seite weisenden Leitungssträngen verläuft die Verfahrebene hingegen vertikal, da die dortigen Schleifkontakte von der Seite an die Leiterstränge herangefahren werden.

Da der Längsschlitz 48 mit seiner schmalen Breite S um den Winkel α gekippt ist, vergrößert sich der Spielraum für Bewegungen der Antenne 49 in der Verfahrebene E und insbesondere in der X-Richtung erfindungsgemäß. Hierdurch kann eine Berührung der Wandungen 51, 52 des Längsschlitz 48 durch die Antenne 49 noch besser vermieden werden.

### Bezugszeichenliste

- 1: Schleifleitungssystem
- 2: Schienenstrang
- 3: Stromabnehmer
- 4: Laufrollen
- 5: Schleifleitungshalterungen
- 6: Schleifleitung
- 7, 7', 7": Leiterstranghalterungen
- 8, 8', 8": Phasenleiterstränge
- 9: Isolierprofil
- 10: Phasenleiterprofil
- 11: Schleiffläche Phasenleiterstrang
- 12, 12', 12": Schleifkontakt
- 13: Schleifkontaktträger
- 14: Zustellmechanismus
- 15: Erdungsleiterstrang
- 16: Erdungsleiterprofil
- 17: Erdungsisolierprofil
- 18: Kontaktöffnung Erdungsisolierprofil
- 19: Schlitzhohlleiter
- 20: Längsschlitz
- 21: Antenne
- 22: rechter Erdungsschleifkontakt
- 23: linker Erdungsschleifkontakt
- 24: rechte geneigte Erdungsschleifkontaktfläche
- 25: linke geneigte Erdungsschleifkontaktfläche
- 26: rechte geneigte und ggf. abgerundete Schleiffläche
- 27: linke geneigte und ggf. abgerundete Schleiffläche
- 28: Codeband
- 29: Leseeinheit
- 30: alternativer Erdungsleiterstrang
- 31: alternatives Erdungsleiterprofil
- 32: Kontaktöffnung Erdungsleiterstrang
- 33: Erdungsschleifkontakt
- 34: Schleiffläche Erdungsleiterprofil
- 35: Schlitzhohlleiter
- 36: Längsschlitz
- 37: Antenne
- 38: alternativer Erdungsleiterstrang
- 39: Erdungsleiterprofil
- 40: Schlitzhohlleiter
- 41: Längsschlitz
- 42: Schleiffläche Erdungsleiterprofil
- 43: Erdungsschleifkontakt
- 44: Antenne
- 45: alternativer Erdungsleiterstrang
- 46: Erdungsleiterprofil
- 47: gekippter Schlitzhohlleiter
- 48: gekippter Längsschlitz
- 49: abgewinkelte Antenne
- 50: abgewinkeltes Antennenende
- 51: obere Schlitzwandung
- 52: untere Schlitzwandung
- 53: abgewinkelte obere Schlitzwandung
- 54: federnder Abschnitt
- 55: Schleiffläche Erdungsleiterprofil
- 56: Erdungsschleifkontakt
- E: Verfahrebene Stromabnehmer
- L: Längsrichtung Schleifleitung
- S: Breite des Längsschlitz
- X: Richtung quer zur Längsrichtung in Verfahrebene
- Z: Höhenrichtung senkrecht zur Verfahrebene

## Patentansprüche

1. Schleifleitung (6) zur Versorgung mindestens eines an der Schleifleitung (6) in deren Längsrichtung (L) verfahrbaren elektrischen Verbrauchers, mit mindestens einem in Längsrichtung (L) verlaufenden Leiterstrang (15; 30; 38; 45) mit einem elektrisch leitenden Leiterprofil (16; 31; 39; 46) zur Kontaktierung mit einem Schleifkontakt (22, 23; 33; 43; 56) des Verbrauchers und mit mindestens einer in Längsrichtung (L) verlaufenden Signalübertragungsvorrichtung (19; 35; 40; 47), **dadurch gekennzeichnet, dass** die Signalübertragungsvorrichtung (19; 35; 40; 47) und das Leiterprofil (16; 31; 39; 46) als Baueinheit ausgebildet sind, wobei die Signalübertragungsvorrichtung (19; 35; 40; 47) aus einem elektrisch leitenden Material ausgebildet ist, wobei die Signalübertragungsvorrichtung einen in Längsrichtung (L) verlaufenden länglichen Schlitzhohlleiter (19; 35; 40; 47) mit einem Längsschlitz (20; 36; 41; 48) zur Datenübertragung zu und von dem Verbraucher umfasst, wobei das Leiterprofil als Erdungsleiterprofil (16) ausgebildet ist, und wobei der Schlitzhohlleiter (19) in das Erdungsleiterprofil (16) integriert ist.

2. Schleifleitung (6) nach Anspruch 1, **dadurch gekennzeichnet, dass** der Längsschlitz (20; 36; 41) und eine Kontaktöffnung (18; 32) des Leiterstrangs (15; 30; 38) zur Aufnahme des Schleifkontakts (22, 23; 33; 43; 56) in die gleiche Richtung weisen.

3. Schleifleitung (6) nach einem der voranstehenden Ansprüche, **dadurch gekennzeichnet, dass** das Leiterprofil (16; 31) quer zur Längsrichtung (L) neben dem Längsschlitz (20; 36) mindestens eine Schleiffläche (26; 34) für eine entsprechend geformte und ausgerichtete Schleifkontaktfläche (24) des Schleifkontakts (22; 33) aufweist.

4. Schleifleitung (6) nach Anspruch 3, **dadurch gekennzeichnet, dass** das Leiterprofil (16) quer zur Längsrichtung (L) beidseits des Längsschlitzes (20) Schleifflächen (26, 27) für entsprechend geformte und ausgerichtete Schleifkontaktflächen (24, 25) von Schleifkontakten (22, 23) aufweist.

5. Schleifleitung (6) nach Anspruch 4, **dadurch gekennzeichnet, dass** die Schleifflächen (26, 27) zueinander gegensinnig abgeschrägt und/oder abgerundet sind.

6. Stromabnehmer (3) für einen in eine Längsrichtung (L) längs einer Schleifleitung (6) verfahrbaren elektrischen Verbraucher, mit mindestens einem Schleifkontakt (22, 23; 33; 43; 56) zur Kontaktierung mit einem elektrisch leitenden Leiterprofil (16; 31; 39; 46) eines Leiterstrangs (15; 30; 38; 45) der Schleifleitung (6) und mit mindestens einer Antenne (21; 37; 44; 49) zur Datenübertragung zu einer in Längsrichtung (L) verlaufenden Signalübertragungsvorrichtung (19; 35; 40; 47) der Schleifleitung (6), **dadurch gekennzeichnet, dass** der Schleifkontakt (22, 23; 33; 43; 56) und die Antenne (21; 37; 44; 49) aus einem elektrisch leitenden Material und als eine Baueinheit ausgebildet sind, wobei die Signalübertragungsvorrichtung einen länglichen Schlitzhohlleiter (19; 35; 40; 47) mit einem Längsschlitz (20; 36; 41; 48) zur Datenübertragung zu und von dem Verbraucher umfasst, wobei das Leiterprofil als Erdungsleiterprofil (16; 31; 39; 46) ausgebildet ist, wobei der Schlitzhohlleiter (19; 35; 40; 47) in das Erdungsleiterprofil (16; 31; 39; 46) integriert ist, und wobei der Schleifkontakt als Erdungsschleifkontakt (22, 23; 33; 43; 56) ausgebildet ist.

7. Stromabnehmer (3) nach Anspruch 6, **dadurch gekennzeichnet, dass** der Schleifkontakt (22, 23; 33; 43) und die Antenne (21; 37; 44) senkrecht zur Längsrichtung (L) in die gleiche Richtung weisen.

8. Stromabnehmer (3) nach einem der Ansprüche 6 bis 7, **dadurch gekennzeichnet, dass** der Schleifkontakt (22) quer zur Längsrichtung (L) neben der Antenne (21) und elektrisch von dieser isoliert angeordnet ist und eine Schleifkontaktfläche (24) für eine entsprechend geformte und ausgerichtete Schleiffläche (26) des Leiterprofils (16) aufweist.

9. Stromabnehmer (3) nach Anspruch 8, **dadurch gekennzeichnet, dass** ein weiterer Schleifkontakt (23) quer zur Längsrichtung (L) auf der gegenüberliegenden Seite neben der Antenne (21) und elektrisch von dieser isoliert angeordnet ist und eine weitere Schleifkontaktfläche (25) für eine entsprechend geformte und ausgerichtete Schleiffläche (27) des Leiterprofils (16) aufweist.

10. Stromabnehmer (3) nach Anspruch 9, **dadurch gekennzeichnet, dass** die Schleifkontaktflächen (24, 25) zueinander gegensinnig abgeschrägt und/oder abgerundet sind.

11. Stromabnehmer nach einem der Ansprüche 6 bis 10, **dadurch gekennzeichnet, dass** in Längsrichtung (L) zwei Antennen (21) hintereinander angeordnet sind.

12. Schleifleitungssystem mit mindestens einem an einer Schleifleitung (6) in deren Längsrichtung (L) verfahrbaren elektrischen Verbraucher, der einen Stromabnehmer mit mindestens einem Schleifkontakt (22, 23; 33; 43; 56) zur Kontaktierung mit mindestens einem elektrischen leitenden Leiterprofil (16; 31; 39; 46) der Schleifleitung (6) aufweist, und der eine Antenne (22; 26; 37; 50) zur Datenübertragung mit einer Signalübertragungsvorrichtung (19; 35; 40; 47) der Schleifleitung (6) aufweist, **dadurch gekennzeichnet, dass** die Signalübertragungsvorrichtung (19; 35; 40; 47) und das Leiterprofil (16; 31; 39; 46) als Baueinheit ausgebildet sind, wobei die Signalübertragungsvorrichtung (19; 35; 40; 47) aus einem elektrisch leitenden Material ausgebildet ist, wobei die Signalübertragungsvorrichtung einen in Längsrichtung (L) verlaufenden länglichen Schlitzhohlleiter (19; 35; 40; 47) mit einem Längsschlitz (20; 36; 41; 48) zur Datenübertragung zu und von dem Verbraucher umfasst, wobei das Leiterprofil als Erdungsleiterprofil (16; 31; 39; 46) ausgebildet ist, und wobei der Schlitzhohlleiter (19; 35; 40; 47) in das Erdungsleiterprofil (16; 31; 39; 46) integriert ist, und der als Erdungsschleifkontakt (22, 23; 33; 43; 56) ausgebildete Schleifkontakt (22, 23; 33; 43; 56) und die Antenne (21; 37; 44; 49) aus einem elektrisch leitenden Material und als Baueinheit ausgebildet sind.

13. Schleifleitungssystem nach Anspruch 12 , **dadurch gekennzeichnet, dass** der verfahrbare elektrische Verbraucher mehrere Schleifkontakte (22, 23; 33; 43; 56) zur Kontaktierung mit entsprechenden Leiterprofilen (16; 31; 39; 46) der Schleifleitung (6) aufweist, wobei das mindestens eine Leiterprofil (16; 31; 39; 46) einen Erdungsleiter und/oder Schutzleiter bildet.

## Claims

1. Current conductor line (6) for supplying at least one electrical consuming device which can be moved on the current conductor line (6) in the longitudinal direction (L) thereof, having at least one conductor branch (15; 30; 38; 45) running in longitudinal direction (L) having an electrically conductive conductor profile (16; 31; 39; 46) for contacting with a sliding contact (22, 23; 33; 43; 56) of the consuming device and having at least one signal transmission device (19; 35; 40; 47) running in longitudinal direction (L), **characterised in that** the signal transmission device (19; 35; 40; 47) and the conductor profile (16; 31; 39; 46) are designed as a modular unit, wherein the signal transmission device (19; 35; 40; 47) is formed from an electrically conductive material, wherein the signal transmission device comprises an elongated slotted waveguide (19; 35; 40; 47) running in longitudinal direction (L) having a longitudinal slot (20; 36; 41; 48) for data transmission to and from the consuming device, wherein the conductor profile is formed as an earthing conductor profile (16), and wherein the slotted waveguide (19; 35; 40; 47) is integrated into the earthing conductor profile (16).

2. Current conductor line (6) according to claim 1, **characterised in that** the longitudinal slot (20; 36; 41) and a contact opening (18; 32) of the conductor branch (15; 30; 38) for receiving the sliding contact (22, 23; 33; 43; 56) point in the same direction .

3. Current conductor line (6) according to one of the preceding claims, **characterised in that** the conductor profile (16; 31) has at least one sliding surface (26; 34) transversely to the longitudinal direction (L) next to the longitudinal slot (20; 36) for a correspondingly shaped and aligned sliding contact surface (24) of the sliding contact (22; 33).

4. Current conductor line (6) according to claim 3, **characterised in that** the conductor profile (16) has sliding surfaces (26, 27) transversely to the longitudinal direction (L) on both sides of the longitudinal slot (20) for correspondingly shaped and aligned sliding contact surfaces (24, 25) of sliding contacts (22, 23).

5. Current conductor line (6) according to claim 4, **characterised in that** the sliding surfaces (26, 27) are inclined in opposite direction to one another and/or rounded off.

6. Current collector (3) for an electrical consuming device which can be moved in a longitudinal direction (L) along a current conductor line (6), having at least one sliding contact (22, 23; 33; 43; 56) for contacting with an electrically conductive conductor profile (16; 31; 39; 46) of a conductor branch (15; 30; 38; 45) of the current conductor line (6) and having at least one antenna (21; 37; 44; 49) for data transmission to a signal transmission device (19; 35; 40; 47) of the current conductor line (6) running in longitudinal direction (L), **characterised in that** the sliding contact (22, 23; 33; 43; 56) and the antenna (21; 37; 44; 49) are formed from an electrically conductive material and as a modular unit, wherein the signal transmission device comprises an elongated slotted waveguide (19; 35; 40; 47) having a longitudinal slot (20; 36; 41; 48) for data transmission to and from the consuming device, wherein the conductor profile is formed as an earthing conductor profile (16; 31; 39; 46), wherein the slotted waveguide (19; 35; 40; 47) is integrated into the earthing conductor profile (16; 31; 39; 46), and wherein the sliding contact is formed as an earthing sliding contact (22, 23; 33; 43; 56).

7. Current collector (3) according to claim 6, **characterised in that** the sliding contact (22, 23; 33; 43) and the antenna (21; 37; 44) point in the same direction vertically to the longitudinal direction (L).

8. Current collector (3) according to one of claims 6 to 7, **characterised in that** the sliding contact (22) is arranged transversely to the longitudinal direction (L) next to the antenna (21) and electrically insulated therefrom and has a sliding contact surface (24) for a correspondingly shaped and aligned sliding surface (26) of the conductor profile (16).

9. Current collector (3) according to claim 8, **characterised in that** a further sliding contact (23) is arranged transversely to the longitudinal direction (L) on the opposite side next to the antenna (21) and electrically insulated therefrom and has a further sliding contact surface (25) for a correspondingly shaped and aligned sliding surface (27) of the conductor profile (16).

10. Current collector (3) according to claim 9, **characterised in that** the sliding contact surfaces (24, 25) are inclined in opposite direction to one another and/or rounded off.

11. Current collector according to one of claims 6 to 10, **characterised in that** two antenna (21) are arranged one behind another in longitudinal direction (L).

12. Current conductor line system having at least one electrical consuming device which can be moved on a current conductor line (6) in the longitudinal direction (L) thereof and which has a current collector having at least one sliding contact (22, 23; 33; 43; 56) for contacting with at least one electrically conductive conductor profile (16; 31; 39; 46) of the current conductor line (6), and which has an antenna (22; 26; 37; 50) for data transmission with a signal transmission device (19; 35; 40; 47) of the current conductor line (6), **characterised in that** the signal transmission device (19; 35; 40; 47) and the conductor profile (16; 31; 39; 46) are formed as a modular unit, wherein the signal transmission device (19; 35; 40; 47) is formed from an electrically conductive material, wherein the signal transmission device comprises an elongated slotted waveguide (19; 35; 40; 47) running in longitudinal direction (L) having a longitudinal slot (20; 36; 41; 48) for data transmission to and from the consuming device, wherein the conductor profile is formed as an earthing conductor profile (16; 31; 39; 46), and wherein the slotted waveguide (19; 35; 40; 47) is integrated into the earthing conductor profile (16; 31; 39; 46), and the sliding contact being formed as an earthing sliding contact (22, 23; 33; 43; 56) and the antenna (21; 37; 44; 49) are formed from an electrically conductive material and as a modular unit.

13. Current conductor line system according to claim 12, **characterised in that** the movable electrical consuming device has several sliding contacts (22, 23; 33; 43; 56) for contacting with corresponding conductor profiles (16; 31; 39; 46) of the current conductor line (6), wherein the at least one conductor profile (16; 31; 39; 46) forms an earthing conductor and/or protective conductor.

## Revendications

1. Ligne à frottement (6) servant à alimenter au moins un consommateur électrique pouvant être déplacé au niveau de la ligne à frottement (6) dans son sens longitudinal (L), avec au moins une corde conductrice (15 ; 30 ; 38 ; 45) s'étendant dans le sens longitudinal (L) avec un profil conducteur (16 ; 31 ; 39 ; 46) électroconducteur servant à établir un contact avec un contact glissant (22 ; 23 ; 33 ; 43 ; 56) du consommateur et avec au moins un dispositif de transmission de signaux (19 ; 35 ; 40 ; 47) s'étendant dans le sens longitudinal (L), **caractérisée en ce que** le dispositif de transmission de signaux (19 ; 35 ; 40 ; 47) et le profil conducteur (16 ; 31 ; 39 ; 46) sont réalisés sous la forme d'une unité modulaire, dans laquelle le dispositif de transmission de signaux (19 ; 35 ; 40 ; 47) est réalisé à partir d'un matériau électroconducteur, dans laquelle le dispositif de transmission de signaux comprend un conducteur creux fendu (19 ; 35 ; 40 ; 47) allongé s'étendant dans le sens longitudinal (L) avec une fente longitudinale (20 ; 36 ; 41 ; 48) servant à la transmission de données vers et depuis le consommateur, dans laquelle le profil conducteur étant conçu comme un profil conducteur de masse (16), et dans laquelle le conducteur creux fendu (19) est intégré dans le profilé conducteur de masse (16).

2. Ligne à frottement (6) selon la revendication 1, **caractérisée en ce que** la fente longitudinale (20 ; 36 ; 41) et une ouverture de contact (18 ; 32) de la corde conductrice (15 ; 30 ; 38) pointent dans la même direction afin de recevoir le contact glissant (22, 23 ; 33 ; 43 ; 56).

3. Ligne à frottement (6) selon l'une quelconque des revendications précédentes, **caractérisée en ce que** le profil conducteur (16 ; 31) présente, de manière transversale par rapport au sens longitudinal (L), à côté de la fente longitudinale (20 ; 36), au moins une surface à frottement (26 ; 34) pour une surface à contact glissant (24) formée et orientée de manière correspondante du contact glissant (22 ; 33).

4. Ligne à frottement (6) selon la revendication 3, **caractérisée en ce que** le profil conducteur (16) présente, de manière transversale par rapport au sens longitudinal (L), de part et d'autre de la fente longitudinale (20), des surfaces à frottement (26, 27) pour des surfaces à contact glissant (24, 25) formées et orientées de manière correspondante de contacts glissants (22, 23).

5. Ligne à frottement (6) selon la revendication 4, **caractérisée en ce que** les surfaces à frottement (26, 27) sont chanfreinées et/ou arrondies en sens opposé les unes par rapport aux autres.

6. Collecteur de courant (3) pour un consommateur électrique pouvant être déplacé dans un sens longitudinal (L) le long d'une ligne à frottement (6), avec au moins un contact glissant (22, 23 ; 33 ; 43 ; 56) servant à établir un contact avec un profil conducteur (16 ; 31 ; 39 ; 46) électroconducteur d'une corde conductrice (15 ; 30 ; 38 ; 45) de la ligne à frottement (6) et avec au moins une antenne (21 ; 37 ; 44 ; 49) servant à la transmission de données vers un dispositif de transmission de signaux (19 ; 35 ; 40 ; 47), s'étendant dans le sens longitudinal (L), de la ligne à frottement (6), **caractérisé en ce que** le contact glissant (22, 23 ; 33 ; 43 ; 56) et l'antenne (21 ; 37 ; 44 ; 49) sont réalisés à partir d'un matériau électroconducteur et sous la forme d'une unité modulaire, dans laquelle le dispositif de transmission de signaux comprend un conducteur creux fendu (19 ; 35 ; 40 ; 47) avec une fente longitudinale (20 ; 36 ; 41 ; 48) servant à la transmission de données vers et depuis le consommateur, dans laquelle le profil conducteur étant conçu comme un profil conducteur de masse (16 ; 31 ; 39 ; 46), dans laquelle le conducteur creux fendu (19 ; 35 ; 40 ; 47) est intégré dans le profilé conducteur de masse (16 ; 31 ; 39 ; 46), et dans laquelle le contact glissant étant conçu comme un contact glissant de masse (22, 23 ; 33 ; 43 ; 56).

7. Collecteur de courant (3) selon la revendication 6, **caractérisé en ce que** le contact glissant (22, 23 ; 33 ; 43) et l'antenne (21 ; 37 ; 44) pointent dans la même direction de manière perpendiculaire par rapport au sens longitudinal (L).

8. Collecteur de courant (3) selon l'une quelconque des revendications 6 à 7, **caractérisé en ce que** le contact glissant (22) est disposé de manière transversale par rapport au sens longitudinal (L) à côté de l'antenne (21) et de manière électriquement isolée de cette dernière et présente une surface de contact glissant (24) pour une surface à frottement (26) formée et orientée de manière correspondante du profil conducteur (16).

9. Collecteur de courant (3) selon la revendication 8, **caractérisé en ce qu'**un autre contact glissant (23) est disposé de manière transversale par rapport au sens longitudinal (L) sur le côté faisant face à côté de l'antenne (21) et de manière électriquement isolée de cette dernière et présente une autre surface de contact glissant (25) pour une surface à frottement (27) formée et orientée de manière correspondante du profil conducteur (16).

10. Collecteur de courant (3) selon la revendication 9, **caractérisé en ce que** les surfaces de contact glissant (24, 25) sont chanfreinées et/ou arrondies en sens opposé les unes par rapport aux autres.

11. Collecteur de courant selon l'une quelconque des revendications 6 à 10, **caractérisé en ce que** deux antennes (21) sont disposées l'une derrière l'autre dans le sens longitudinal (L).

12. Système à ligne à frottement avec au moins un consommateur électrique pouvant être déplacé au niveau d'une ligne à frottement (6) dans son sens longitudinal (L), qui présente un collecteur de courant avec au moins un contact glissant (22, 23 ; 33 ; 43 ; 56) servant à établir un contact avec au moins un profil conducteur (16 ; 31 ; 39 ; 46) électroconducteur de la ligne à frottement (6), et qui présente une antenne (22 ; 26 ; 37 ; 50) servant à la transmission de données avec un dispositif de transmission de signaux (19 ; 35 ; 40 ; 47) de la ligne à frottement (6), **caractérisé en ce que** le dispositif de transmission de signaux (19 ; 35 ; 40 ; 47) et le profil conducteur (16 ; 31 ; 39 ; 46) sont réalisés sous la forme d'une unité modulaire, dans lequel le dispositif de transmission de signaux (19 ; 35 ; 40 ; 47) est réalisé à partir d'un matériau électroconducteur, dans lequel le dispositif de transmission de signaux comprend un conducteur creux fendu (19 ; 35 ; 40 ; 47) allongé s'étendant dans le sens longitudinal (L) avec une fente longitudinale (20 ; 36 ; 41 ; 48) servant à la transmission de données vers et depuis le consommateur, dans laquelle le profil conducteur étant conçu comme un profil conducteur de masse (16 ; 31 ; 39 ; 46), et dans laquelle le conducteur creux fendu (19 ; 35 ; 40 ; 47) est intégré dans le profilé conducteur de masse (16 ; 31 ; 39 ; 46) et le contact glissant (22, 23 ; 33 ; 43 ; 56) réalisé sous forme de contact glissant de masse (22, 23 ; 33 ; 43 ; 56) et l'antenne (21 ; 37 ; 44 ; 49) sont réalisés à partir d'un matériau électroconducteur et sous la forme d'une unité modulaire.

13. Système à ligne à frottement selon la revendication 12, **caractérisé en ce que** le consommateur électrique pouvant être déplacé présente plusieurs contacts glissants (22, 23 ; 33 ; 43 ; 56) servant à établir un contact avec des profils conducteurs (16 ; 31 ; 39 ; 46) correspondants de la ligne à frottement (6), dans lequel l'au moins un profil conducteur (16 ; 31 ; 39 ; 46) forme un conducteur de masse et/ou un conducteur de protection.
